# EUROPEAN PATENT APPLICATION

(11) **EP 2 098 402 A1**
(43) Date of publication of application: **09.09.2009**
(21) Application number: 09003320.0
(22) Date of filing: 06.03.2009
(51) Int. Cl.: B60K 15/04

(54) **Cap for a fluid container**

(30) Priority: 07.03.2008 US 34545
(71) Applicant: Flambeau, Inc., Baraboo WI 53913 (US)
(72) Inventor: Schulz, William J., Baraboo, WI 53913 (US); Leiser, Randal D., Baraboo, WI 53913 (US); Roule, Steven T., Covington, GA 30014 (US)
(74) Representative: Schmitt-Nilson, Gerhard

(57) **Abstract**

A cap for a fluid container that includes an outer member (12) and an inner member (14) is provided. The outer member has an inner surface (18) that has at least one finger (17) projecting away therefrom. The inner member is located within the outer member and may rotate relative to the outer member. The inner member also has a recess (38) that has a plurality of ratchet teeth (46) to engage the at least one finger of the outer member. Each ratchet tooth has a torque limiting surface (50) against which the at least one finger is capable of transmitting torque up to a threshold and against which the at least one finger is capable of slipping when the threshold is exceeded. The inner member rotates relative to the outer member when the at least one finger slips against the torque limiting surface.

## Description

### CROSS-REFERENCE TO RELATED APPLICATION

This application claims the benefit of U.S. Provisional Patent Application No. 61/034,545 filed March 7, 2008, the disclosure of which is hereby incorporated by reference.

### STATEMENT REGARDING FEDERALLY SPONSORED RESEARCH OR DEVELOPMENT

Not applicable.

### FIELD OF THE INVENTION

The invention relates to a cap for a fluid container that provides an indication when the cap is properly tightened.

### BACKGROUND OF THE INVENTION

A removable cap is a well known component for sealing an opening of a fluid container. Most caps are threaded components that use a compressible gasket for engaging another component to seal the fluid container. However, gaskets can be damaged due to repeated over-tightening. This may permit fluids to leak from the container. As such, many types of caps include torque limiting features to prevent the cap from being over-tightened. In the loosening direction, however, a larger torque can be applied to assure that the cap can be removed. In addition, groups such as the California Air Resources Board require some type of indication when the cap is properly tightened if the cap is used to seal a fuel tank. As such, some caps include components that provide an audible indication when the cap is sufficiently tightened.

However, there are several limitations to torque limiting and sound producing caps. For example, some designs may include several individual components, resulting in relatively high manufacturing and assembly costs. In addition, some designs require a large envelope for the torque limiting components. Therefore, space may be limited for other components of the cap.

Considering the limitations of previous cap designs, including those designed to meet the requirements of the California Air Resources Board, an improved cap for a fluid container is needed.

### SUMMARY OF THE INVENTION

The present invention provides a cap for a fluid container that includes an outer member and an inner member. The outer member has a longitudinal axis and an axially facing inner surface. The inner surface has at least one finger projecting from the inner surface in the direction of the longitudinal axis. The inner member is located within the outer member and may rotate relative to the outer member about the longitudinal axis. The inner member also has a recess that has a plurality of ratchet teeth to engage the at least one finger of the outer member. Each ratchet tooth has a locking surface against which the at least one finger is capable of transmitting torque in the loosening direction. Each ratchet tooth also has a torque limiting surface against which the at least one finger is capable of transmitting torque up to a threshold in the tightening direction and against which the at least one finger is capable of slipping when the threshold is exceeded in the tightening direction. The inner member rotates relative to the outer member when the at least one finger slips against the torque limiting surface.

In a preferred form, the ratchet teeth engage the at least one finger along the axial direction spaced from the inner surface of the outer member. In the loosening direction, the ratchet teeth engage a longitudinal end surface and in the tightening direction the ratchet teeth engage a longitudinal side surface of the at least one finger.

In other aspects of the invention, the teeth of the outer member may have an arcuate shape or a constant cross section in the direction of the longitudinal axis. Preferably, multiple fingers engage multiple ratchet teeth. In addition, the cap may include a tether assembly and the cap preferably meets the requirements of the California Air Resources Board when used as a cap for a fuel tank.

The foregoing and other objects and advantages of the invention will appear in the detailed description that follows. In the description, reference is made to the accompanying drawings that illustrate a preferred embodiment of the invention.

### FIRST BRIEF DESCRIPTION OF THE DRAWINGS

FIG. 1 is a sectional view of a cap of the present invention;
FIG. 2 is a sectional view along the line 2-2 of FIG. 1;
FIG. 3 is a perspective view of an outer member of the cap of FIG. 1;
FIG. 4 is a perspective view of an inner member of the cap of FIG. 1;
FIG. 5 is a detail view of the area 5-5 of FIG. 2;
FIG. 6 is an exploded perspective view of a second embodiment of a cap of the present invention;
FIG. 7 is a side view of the cap of FIG. 6; and
FIG. 8 is a sectional view along the line 8-8 of FIG. 7.

### DETAILED DESCRIPTION OF THE PREFERRED EMBODIMENT

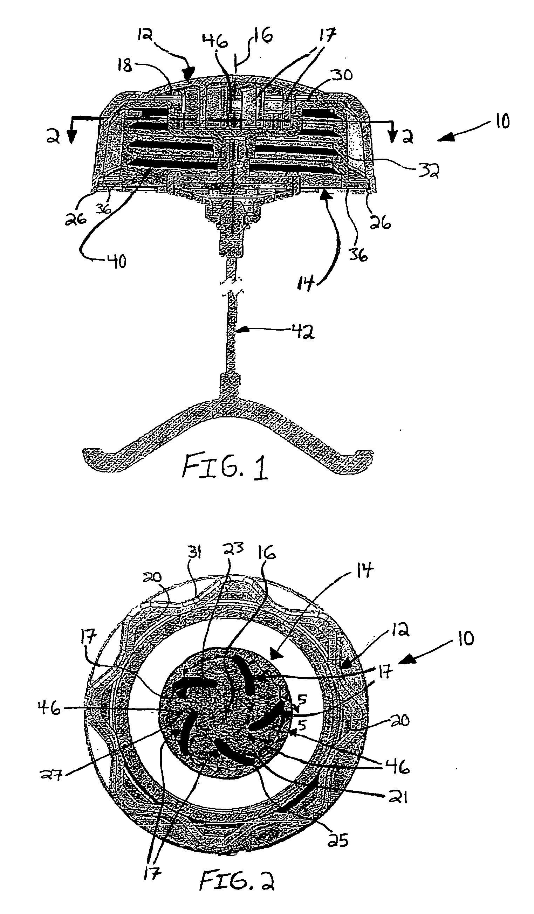

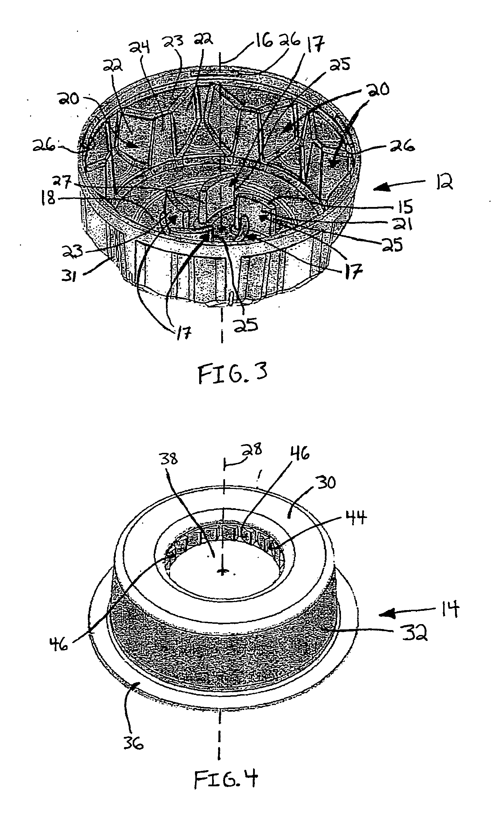

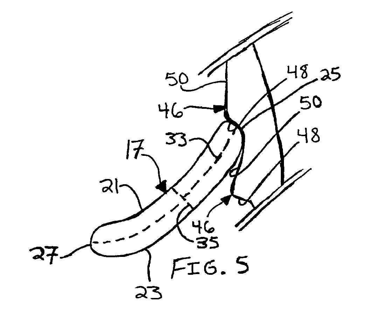

Referring to FIGS. 1-4, a cap 10 according to the present invention includes an outer member 12 (shown separately in FIG. 3) and an inner member 14 (shown separately in FIG. 4). Referring to FIGS. 2 and 3, the outer member 12 is generally circular in shape and includes a longitudinal axis 16. The outer member 12 also includes a plurality of fingers 17 that project away from an inner surface 18 in the direction of the longitudinal axis 16. Although five fingers 17 are shown in the figures, it is possible to design an outer member 12 with a different number of fingers 17. Referring to FIG. 3, the fingers 17 may be fixed to the inner surface 18 around the entire perimeter of the interface between the fingers 17 and the inner surface 18. Referring to FIGS. 3 and 5, each finger 17 includes a bottom surface 15, an inner longitudinally extending side surface 21, an outer longitudinally extending side surface 23, and longitudinally extending end surfaces 25 and 27. Referring to FIG. 5, the longitudinally extending end surfaces 25 and 27 define a major axis 33 of the lateral cross section of each finger 17. The longitudinally extending side surfaces 21 and 23 define a minor axis 35 of the lateral cross section of each finger 17.

The surfaces 21, 23, 25, and 27 are preferably arcuate as viewed from FIG. 2, forming blade-shaped fingers 17. However, other shapes are possible, such as those that would provide generally straight fingers 17. In any case, the fingers 17 preferably have a constant cross section in the direction of the longitudinal axis 16. However, each finger 17 preferably tapers inward, as shown in FIG. 2, from the longitudinally extending end surface 27 near the longitudinal axis 16 to the opposite longitudinally extending end surface 25. In addition, the fingers 17 are preferably spaced about the longitudinal axis 16 at equal angles from one another, although other configurations are possible. For example, the fingers 17 may be spaced apart to form a patterned arrangement or groups of fingers 17. The function of the fingers 17 will be described in further detail below.

Referring to FIG. 1, the inner surface 18 of the outer member 12 may have an arcuate shape near the interface between the fingers 17 and the inner surface 18.

The outer member 12 also includes a plurality of reinforcing sections 20. The reinforcing sections 20 are preferably spaced about the longitudinal axis 16 at equal angles from one another. Each reinforcing section 20 has two side surfaces 22, a top surface 23, and an intermediate surface 24. As such, the reinforcing sections 20 preferably secure the inner member 14 within the outer member 12 as described below. In addition, the reinforcing sections 20 may provide rigidity for the outer member 12. The outer member 12 has an outer surface 31 that may be indented to match the shape of the reinforcing sections 20. Such an outer surface 31 may provide a component that is easier to manufacture and easier for a user to grip.

The outer member 12 further includes a plurality of retainer ridges 26 that project radially inwardly toward the longitudinal axis 16. Like other components, the retainer ridges 26 may be spaced about the longitudinal axis 16 at equal angles from one another. The retainer ridges 26 also preferably secure the inner member 14 within the outer member 12 as described below.

Referring to FIGS. 1 and 4, the inner member 14 is generally circular in shape and includes a longitudinal axis 28. The inner member 14 includes an upper surface 30, an outer surface 32, a retainer ring 36, an open bottom (not shown), and a recess 38. The interior of the inner member 14 includes internal threads 40, as shown in FIG. 1. The internal threads 40 connect to an externally threaded component of the fluid tank. Still referring to FIG. 1, the retainer ring 36 is engaged by the retainer ridges 26 of the outer member 12. The outer surface 32 of the inner member 14 is engaged by the intermediate surfaces 24 of the reinforcing sections 20 of the outer member 12. In addition, the upper surface 30 is engaged by the inner surface 18 of the outer member 12. The engagement of these components prevents relative translation of the inner member 14 relative to the outer member 12. However, the inner member 14 and the outer member 12 are permitted to rotate relative to one another about the longitudinal axis 16. This aspect will be described in further detail below. The inner member 14 may also connect to a tether assembly 42 as shown in FIG. 1. The tether assembly 42, if provided, may be any type of well known tether commonly used with caps. The tether assembly 42 could also permit the cap 10 to meet specific requirements, such as those of the California Air Resources Board.

Referring to FIG. 4, the recess 3 8 of the inner member 14 includes an outer surface 44 that faces radially inward and has a plurality of ratchet teeth 46. The ratchet teeth 46 preferably have a constant cross section in the direction of the longitudinal axis 28. Like other components, the ratchet teeth 46 may be spaced about the longitudinal axis 28 at equal angles from one another. The ratchet teeth 46 project away from the outer surface 44, and referring to FIG. 5, each ratchet tooth 46 also has a locking surface 48 and a torque limiting surface 50. The locking surfaces 48 and the torque limiting surfaces 50 engage the fingers 17 of the outer member 12 in operation of the cap 10. Specifically, the locking surfaces 48 and the torque limiting surfaces 50 preferably engage the longitudinally extending end surfaces 25 and the outer longitudinally extending side surfaces 23, respectively, of the fingers 17 during operation of the cap 10. This engagement is at an axial position along the fingers 17 that is spaced from the inner surface 18 of the outer member 12 as shown in FIG. 1.

Referring to FIGS. 1 and 2, the cap 10 is tightened and connected to a threaded component (not shown) by rotating the cap 10 in a clockwise direction (as viewed from FIG. 2). The outer longitudinally extending surfaces 23 of the fingers 17 engage the torque limiting surfaces 50 (FIG. 5) as the internal threads 40 engage the threaded component. This prevents the outer member 12 and the inner member 14 from rotating relative to one another. However, a gasket (not shown) in the inner member 14 engages the threaded component when the cap 10 has sufficiently connected to the threaded component and sealed fluid tank. Compression of the gasket increases the amount of torque required to continue threading the cap 10 onto the threaded component. The interface between the fingers 17 and the torque limiting surfaces 50 cannot transmit this increased torque, and the fingers 17 slip over the ratchet teeth 46 with continued clockwise rotation of the cap 10. Those skilled in the art will recognize that the fingers 17 slip over the torque limiting surfaces 50 since each of these surfaces applies a force in a direction in which each finger 17 deflects relatively easily. That is, each torque limiting surface 50 applies a force generally in the direction of the minor axis 35 of the lateral cross section of the finger 17. This causes the portion of each finger 17 that contacts the ratchet tooth 46 to bend in multiple directions. Specifically, the portion of each finger 17 that contacts the ratchet teeth 46 bends inward away from the ratchet teeth 46 and upward toward the inner surface 18 of the outer member 12. Therefore, the outer member 12 and the inner member 14 rotate relative to one another with continued clockwise rotation of the cap 10. This preferably causes a clicking sound to indicate that the cap 10 is sealed tightly against the threaded component.

The cap 10 is loosened and disconnected from the threaded component by rotating the cap in a counter-clockwise direction (as viewed from FIG. 2). The longitudinally extending end surfaces 25 of the fingers 17 engage the locking surfaces 48 (FIG. 5) as the internal threads 40 disengage the threaded component. This prevents the outer member 12 and the inner member 14 from rotating relative to one another. Unlike the process for connecting the cap 10 to the fluid tank, the fingers 17 will not slip over the ratchet teeth 46 when the cap 10 is disconnected. This is the case due to the angle of the locking surfaces 48. Additionally, those skilled in the art will recognize that each locking surface 48 applies a force to the finger 17 in a direction in which the finger 17 does not easily deflect. That is, each locking surface 48 applies a force in the direction of the major axis 33 of the lateral cross section of the finger 17. This causes the portion of each finger 17 that contacts the ratchet tooth 46 to compress slightly in the direction of the major axis 33. However, this compression does not cause the fingers 17 to slip over the locking surfaces 48.

The outer member 12 and the inner member 14 are preferably made of nylon and formed in an injection molding process. The injection molding process, in addition to forming internal threads in a component during such a process, is well known in the art. Other types of materials may be used to form these components provided that the coefficient of friction between the fingers 17 and the ratchet teeth 46 and the modulus of elasticity are considered. Changes in the coefficient of friction and the modulus of elasticity will change the amount of torque that may be transmitted from the outer member 12 to the inner member 14. In addition, the outer member 12 and the inner member 14 may be assembled by simply pushing the inner member 14 into the outer member 12 in the orientation shown in FIG. 1. However, the retainer ring 36 will cause the outer surface 31 of the outer member 12 to deflect slightly due to contact with the retainer ridges 26. The inner member 14 will snap in place when the retainer ring 36 moves past the retainer ridges 26.

It should be noted that the torque limiting components of the cap 10 of the present invention occupy relatively little space. This is due to the fact that the fingers 17 and the ratchet teeth 46 are contained within the recess 41 of the inner member 14 when the cap 10 is assembled.

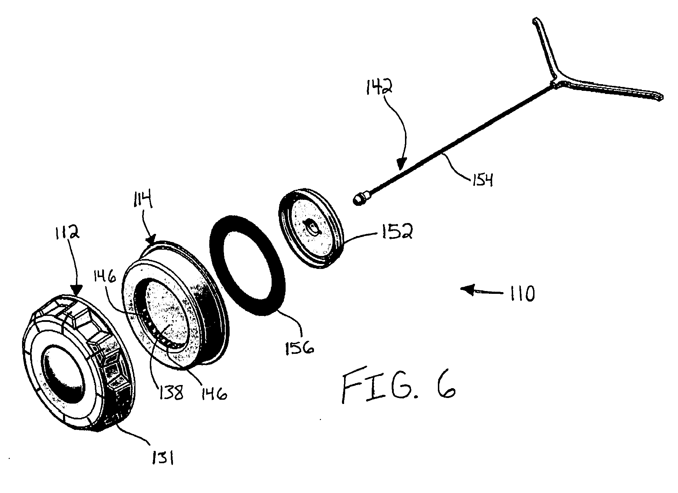

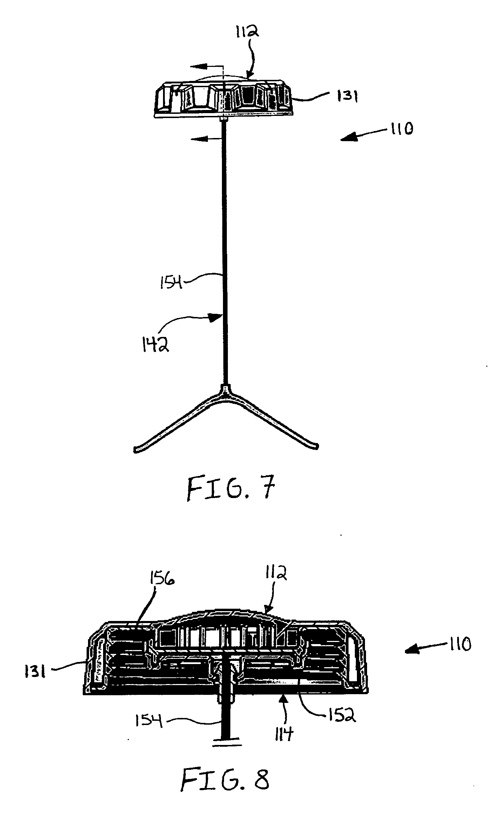

Referring to FIGS. 6-8, a second embodiment of a cap 110 according to the present invention is shown. Like the first embodiment of the cap 10, the cap 110 includes an outer member 112, an inner member 114, and a tether assembly 142. The outer member 112 includes an outer surface 131 that is indented to match the shape of reinforcing sections (not shown) inside the outer member 112. The inner member 114 includes a recess 138 with ratchet teeth 146. The tether assembly 142 includes a tether attachment member 152 that secures a tether 154 to the inner member 114. The tether attachment member 152 is preferably connected to the inner member 114 by friction welding. This process is well known in the art. In addition, the tether attachment member 152 also secures a gasket 156 within the inner member 114. Other components of the second embodiment of the cap 110 that are not discussed in this paragraph are the same as the components discussed with the first embodiment of the cap 10.

As discussed above, the cap of the present invention can be used as a cap for a fuel tank to meet the requirements of the California Air Resources Board. This is achieved by providing a cap that includes a tether assembly and components that provide an indication when the cap is properly tightened. These components help ensure that a proper seal is formed by providing an audible indication and discouraging use of caps that are not provided with the fuel tank. It should also be noted that the cap of the present invention has been identified as a fuel cap by way of example. The cap may be used to seal other types of fluid containers, such as oil containers, chemical containers, or other containers that use similarly designed caps. As such, the cap of the present invention may have a nominal diameter in the range of approximately 1.5" to 3.5". However, those skilled in the art will recognize that the aspects of the present invention can be applied to a cap of any size.

It is specifically intended that the present invention not be limited to the embodiments and illustrations contained herein, but include modified forms of those embodiments including portions of the embodiments and combinations of elements of different embodiments as come within the scope of the following claims.

### SECOND BRIEF DESCRIPTION OF THE DRAWINGS

Second, the invention will hereafter be described with reference to the accompanying drawings, wherein like reference numerals denote like elements, and:

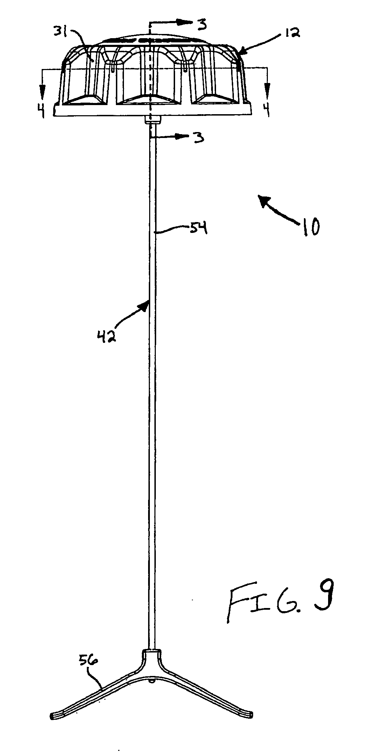

FIG. 9 is a side view of a cap of the present invention;

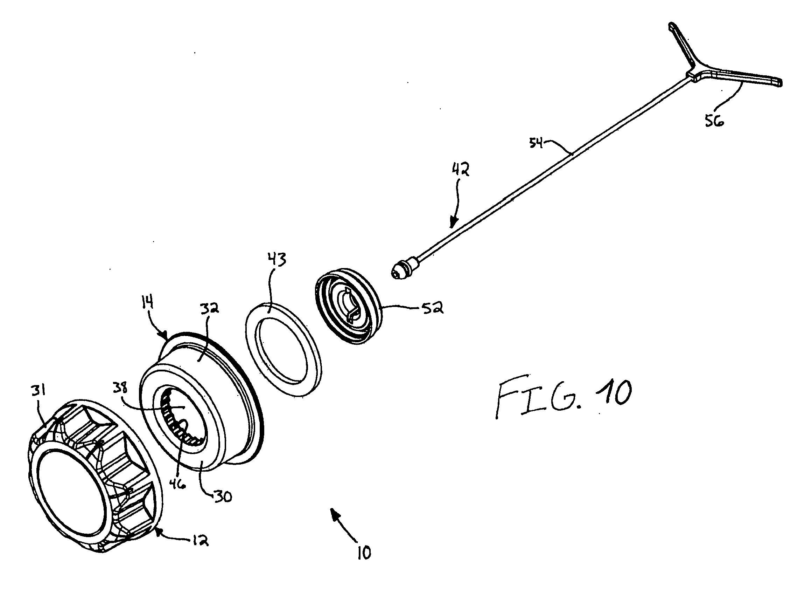

FIG. 10 is an exploded perspective view of the cap of FIG. 1;

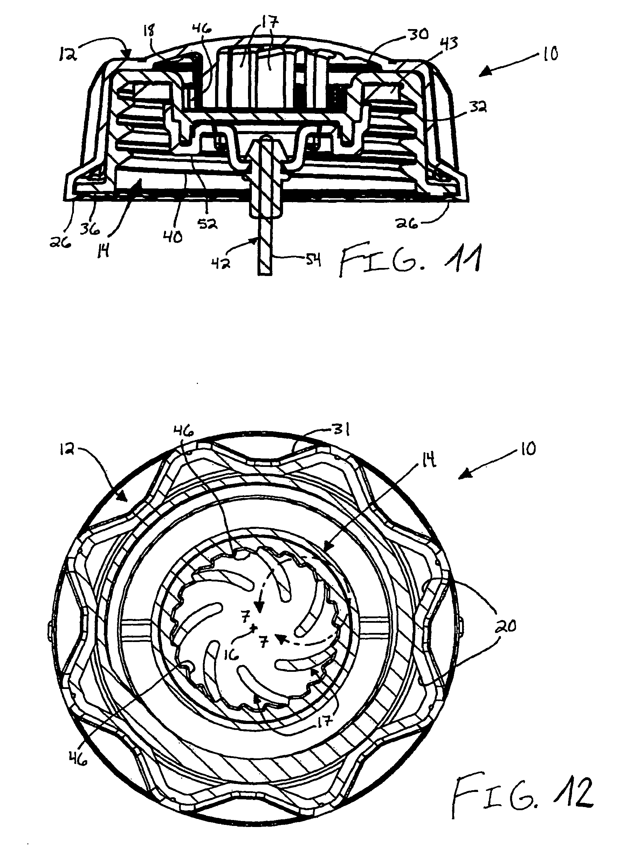

FIG. 11 is a sectional view along the line 3-3 of FIG. 1;
FIG. 12 is a sectional view along the line 4-4 of FIG. 1;

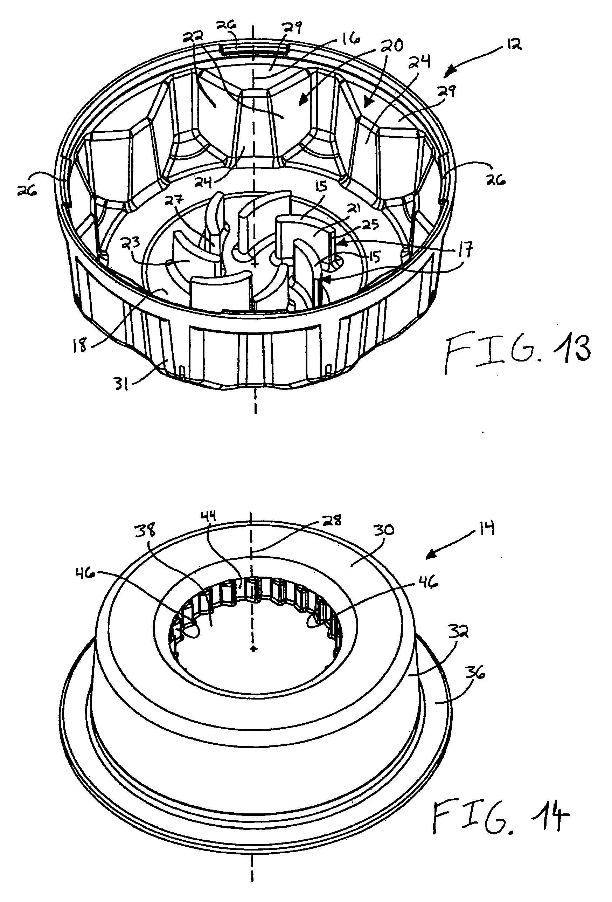

FIG. 13 is a perspective view of an outer member of the cap of FIG. 1;
FIG. 14 is a perspective view of an inner member of the cap of FIG. 1; and

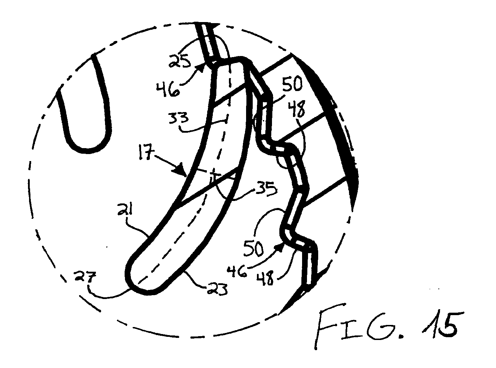

FIG. 15 is a detail view of the area 7-7 of FIG. 4.

### DETAILED DESCRIPTION OF THE PREFERRED EMBODIMENT

Referring to FIGS. 9-14, a cap 10 according to the present invention includes an outer member 12 (shown separately in FIG. 13) and an inner member 14 (shown separately in FIG. 6) housed therein. Referring to FIGS. 12 and 13, the outer member 12 is generally circular in shape and defines a longitudinal axis 16. The outer member 12 also includes a plurality of fingers 17 that project away from an inner surface 18 in the direction of the longitudinal axis 16. Although seven fingers 17 are shown in the figures, it is possible to design an outer member 12 with a different number of fingers 17. Referring to FIG. 13, the fingers 17 may be fixed to the inner surface 18 around the entire perimeter of the interface between the fingers 17 and the inner surface 18, and referring to FIG. 11, the inner surface 18 of the outer member 12 may have an arcuate shape near the interface between the fingers 17 and the inner surface 18. Referring now to FIGS. 13 and 15, each finger 17 includes a bottom surface 15, an inner longitudinally extending side surface 21, an outer longitudinally extending side surface 23, and longitudinally extending end surfaces 25 and 27. Referring to FIG. 15, the longitudinally extending end surfaces 25 and 27 define a major axis 33 of the lateral cross section of each finger 17. The longitudinally extending side surfaces 21 and 23 define a minor axis 35 of the lateral cross section of each finger 17.

The longitudinally extending end surface 25 is preferably flat as viewed in FIG. 15. The surfaces 21, 23, and 27 are preferably arcuate as viewed in FIG. 15, forming blade-shaped fingers 17. However, other shapes are possible, such as those that would provide generally straight fingers 17. In any case, the fingers 17 preferably have a constant cross section in the direction of the longitudinal axis 16. However, each finger 17 preferably tapers inwardly, as shown in FIG. 15, from the longitudinally extending end surface 27 near the longitudinal axis 16 to the opposite longitudinally extending end surface 25. In addition, the fingers 17 are preferably spaced about the longitudinal axis 16 at equal angles from one another, although other configurations are possible. For example, the fingers 17 may be spaced apart to form a patterned arrangement or groups of fingers 17. The function of the fingers 17 will be described in further detail below.

The outer member 12 also includes a plurality of reinforcing sections 20. The reinforcing sections 20 are preferably spaced about the longitudinal axis 16 at equal angles from one another. Each reinforcing section 20 has two side surfaces 22, a top surface 29, and an intermediate surface 24. As such, the reinforcing sections 20 preferably secure the inner member 14 within the outer member 12 as described below. In addition, the reinforcing sections 20 may provide rigidity for the outer member 12. The outer member 12 has an outer surface 31 that may be indented to match the shape of the reinforcing sections 20. Such an outer surface 31 may provide a component that is easier to manufacture and easier for a user to grip.

The outer member 12 further includes a plurality of retainer ridges 26 that project radially inwardly toward the longitudinal axis 16. Like other components, the retainer ridges 26 may be spaced about the longitudinal axis 16 at equal angles from one another. The retainer ridges 26 also preferably secure the inner member 14 within the outer member 12 as described below.

Referring to FIGS. 10 and 14, the inner member 14 is generally circular in shape and defines a longitudinal axis 28. The inner member 14 includes an upper surface 30, an outer surface 32, a retainer ring 36, an open bottom (not shown), and a recess 38. The interior of the inner member 14 includes internal threads 40, as shown in FIG. 11. The internal threads 40 connect to an externally threaded component of the fluid tank. Still referring to FIG. 11, the retainer ring 36 is engaged by the retainer ridges 26 of the outer member 12. The outer surface 32 of the inner member 14 is engaged by the intermediate surfaces 24 of the reinforcing sections 20 of the outer member 12. In addition, the upper surface 30 is engaged by the inner surface 18 of the outer member 12. The engagement of these components prevents relative translation of the inner member 14 relative to the outer member 12. However, the inner member 14 and the outer member 12 are permitted to rotate relative to one another about the longitudinal axis 16. This aspect will be described in further detail below.

Referring to FIG. 14, the recess 38 of the inner member 14 includes an outer surface 44 that faces radially inward and has a plurality of ratchet teeth 46. The ratchet teeth 46 preferably have a constant cross section in the direction of the longitudinal axis 28. Like other components, the ratchet teeth 46 may be spaced about the longitudinal axis 28 at equal angles from one another. The ratchet teeth 46 project away from the outer surface 44, and referring to FIG. 15, each ratchet tooth 46 also has a locking surface 48 and a torque limiting surface 50. The locking surfaces 48 and the torque limiting surfaces 50 engage the fingers 17 of the outer member 12 in operation of the cap 10. Specifically, the locking surfaces 48 and the torque limiting surfaces 50 preferably engage the longitudinally extending end surfaces 25 and the outer longitudinally extending side surfaces 23, respectively, of the fingers 17 during operation of the cap 10. This engagement is at an axial position along the fingers 17 that is spaced from the inner surface 18 of the outer member 12 as shown in FIG. 11.

The inner member 14 may support a tether assembly 42 and a gasket 43 as shown in FIGS. 9-11. The tether assembly 42 and the gasket 43, if provided, may be of any appropriate type commonly used with caps. For example, the tether assembly 42 may include a tether connector 52 that secures a cord 54 and an anchor 56 to the inner member 14. The tether connector 52 is preferably connected to the inner member 14 by friction welding. This process is well known in the art. In addition, the tether connector 52 also secures the gasket 43 within the inner member 14. The tether assembly 42 could also permit the cap 10 to meet specific requirements, such as those of the California Air Resources Board.

Referring to FIGS. 11 and 12, the cap 10 is tightened and connected to a threaded component (not shown) by rotating the cap 10 in a clockwise direction (as viewed from FIG. 4). The outer longitudinally extending surfaces 23 of the fingers 17 engage the torque limiting surfaces 50 (FIG. 15) as the internal threads 40 engage the threaded component. This prevents the outer member 12 and the inner member 14 from rotating relative to one another. However, the gasket 43 in the inner member 14 engages the threaded component when the cap 10 has sufficiently connected to the threaded component and sealed the fluid tank. Compression of the gasket increases the amount of torque required to continue threading the cap 10 onto the threaded component. The interface between the fingers 17 and the torque limiting surfaces 50 cannot transmit this increased torque, and the fingers 17 slip over the ratchet teeth 46 with continued clockwise rotation of the cap 10. Those skilled in the art will recognize that the fingers 17 slip over the torque limiting surfaces 50 since each of these surfaces applies a force in a direction in which each finger 17 deflects relatively easily. That is, each torque limiting surface 50 applies a force generally in the direction of the minor axis 35 of the lateral cross section of the finger 17. This causes the portion of each finger 17 that contacts the ratchet tooth 46 to bend in multiple directions. Specifically, the portion of each finger 17 that contacts the ratchet teeth 46 bends inward away from the ratchet teeth 46 and upward toward the inner surface 18 of the outer member 12. Therefore, the outer member 12 and the inner member 14 rotate relative to one another with continued clockwise rotation of the cap 10. This preferably causes a clicking sound to indicate that the cap 10 is sealed tightly against the threaded component.

The cap 10 is loosened and disconnected from the threaded component by rotating the cap in a counter-clockwise direction (as viewed from FIG. 12). The longitudinally extending end surfaces 25 of the fingers 17 engage the locking surfaces 48 (FIG. 15) as the internal threads 40 disengage the threaded component. This prevents the outer member 12 and the inner member 14 from rotating relative to one another. Unlike the process for connecting the cap 10 to the fluid tank, the fingers 17 will not slip over the ratchet teeth 46 when the cap 10 is disconnected. This is due to the angle of the locking surfaces 48. Additionally, those skilled in the art will recognize that each locking surface 48 applies a force to the finger 17 in a direction in which the finger 17 does not easily deflect. That is, each locking surface 48 applies a force in the direction of the major axis 33 of the lateral cross section of the finger 17. This causes the portion of each finger 17 that contacts the ratchet tooth 46 to compress slightly in the direction of the major axis 33. However, this compression does not cause the fingers 17 to slip over the locking surfaces 48.

The outer member 12 and the inner member 14 are preferably made of nylon and formed in an injection molding process. The injection molding process, in addition to forming internal threads in a component during such a process, is well known in the art. Other types of materials may be used to form these components provided that the coefficient of friction between the fingers 17 and the ratchet teeth 46 and the modulus of elasticity are considered. Changes in the coefficient of friction and the modulus of elasticity will change the amount of torque that may be transmitted from the outer member 12 to the inner member 14. In addition, the outer member 12 and the inner member 14 may be assembled by simply pushing the inner member 14 into the outer member 12 in the orientation shown in FIG. 3. However, the retainer ring 36 will cause the outer surface 31 of the outer member 12 to deflect slightly due to contact with the retainer ridges 26. The inner member 14 will snap in place when the retainer ring 36 moves past the retainer ridges 26.

It should be noted that the torque limiting components of the cap 10 of the present invention occupy relatively little space. This is due to the fact that the fingers 17 and the ratchet teeth 46 are contained within the recess 41 of the inner member 14 when the cap 10 is assembled.

As discussed above, the cap of the present invention can be used as a cap for a fuel tank to meet the requirements of the California Air Resources Board. This is achieved by providing a cap that includes a tether assembly and components that provide an indication when the cap is properly tightened. These components help ensure that a proper seal is formed by providing an audible indication and discouraging use of caps that are not provided with the fuel tank. It should also be noted that the cap of the present invention has been identified as a fuel cap by way of example. The cap may be used to seal other types of fluid containers, such as oil containers, chemical containers, or other containers that use similarly designed caps. As such, the cap of the present invention may have a nominal diameter in the range of approximately 1.5" to 3.5". However, those skilled in the art will recognize that the aspects of the present invention can be applied to a cap of any size.

It is specifically intended that the present invention not be limited to the embodiments and illustrations contained herein, but include modified forms of those embodiments including portions of the embodiments and combinations of elements of different embodiments as come within the scope of the following claims.

## Claims

1. A cap for a fluid container, comprising:
an outer member defining a longitudinal axis and having an inner surface, the inner surface having at least one finger projecting from the inner surface in the direction of the longitudinal axis;
an inner member having a recess and threads to connect to a threaded component, the inner member being located within the outer member and being rotatable relative to the outer member about the longitudinal axis, the recess having a plurality of ratchet teeth to engage the at least one finger of the outer member, each ratchet tooth having:
a locking surface against which the at least one finger is capable of transmitting torque; and
a torque limiting surface against which the at least one finger is capable of transmitting torque up to a threshold and against which the at least one finger is capable of slipping when the threshold is exceeded;
wherein the inner member rotates relative to the outer member when the at least one finger slips against the torque limiting surface.

2. A cap for a fluid container, comprising:
an outer member defining a longitudinal axis and having an inner surface, the inner surface having at least one finger projecting from the inner surface in the direction of the longitudinal axis, and the at least one finger having a longitudinally extending surface;
an inner member having a recess and threads to connect to a threaded component, the inner member being located within the outer member and being rotatable relative to the outer member about the longitudinal axis, the recess having a plurality of ratchet teeth to engage the at least one finger of the outer member, the ratchet teeth engaging the longitudinally extending surface of the at least one finger at an axial position that is spaced from the inner surface of the outer member and having:
a locking surface against which the at least one finger is capable of transmitting torque; and
a torque limiting surface against which the at least one finger is capable of transmitting torque up to a threshold and against which the at least one finger is capable of slipping when the threshold is exceeded;
wherein the inner member rotates relative to the outer member when the at least one finger slips against the torque limiting surface.

3. The cap of claim 2, wherein the longitudinally extending surface of the at least one finger includes a longitudinally extending end surface that is capable of transmitting torque to the locking surfaces of the ratchet teeth in a loosening direction.

4. The cap of claims 2 or 3, wherein the longitudinally extending surface of the at least one finger includes a longitudinally extending side surface that is capable of transmitting torque to the torque limiting surfaces of the ratchet teeth up to a threshold and slipping when the threshold is exceeded in a tightening direction.

5. The cap of any of the claims 1 to 4, wherein the inner member further includes an outer surface and an upper surface, and the upper surface is located between the outer surface and the recess.

6. The cap of any of the claims 1 to 5, wherein the recess further includes an outer surface that faces radially inward and connects to the plurality of ratchet teeth.

7. The cap of any of the claims 1 to 6, wherein each of the ratchet teeth has a constant cross section in the direction of the longitudinal axis.

8. The cap of any of the claims 1 to 7, wherein the at least one finger has a constant cross section in the direction of the longitudinal axis.

9. The cap of any of the claims 1 to 8, wherein the at least one finger has an arcuate shape.

10. The cap of any of the claims 1 to 9, wherein the at least one finger tapers inwardly from an end surface near the longitudinal axis to an opposite end surface.

11. The cap of any of the claims 1 to 10, wherein the outer member further includes a surface with a plurality of reinforcing sections.

12. The cap of any of the claims 1 to 11, wherein the cap includes a tether assembly.

13. The cap of any of the claims 1 to 12, wherein the inner surface of the outer member has a plurality of fingers projecting from the inner surface in the direction of the longitudinal axis.

14. The cap of any of the claims 1 to 13, wherein each finger is spaced apart from adjacent fingers about the longitudinal axis by equal angles.
